# EUROPÄISCHE PATENTSCHRIFT

(11) **EP 3 554 981 B1**
(45) Veröffentlichungstag und Bekanntmachung des Hinweises auf die Patenterteilung: **04.10.2023**
(21) Anmeldenummer: 17818511.2
(22) Anmeldetag: 13.12.2017
(51) Int. Cl.: B66B 5/18, B66B 17/34

(54) **PARKBREMSE**
PARKING BRAKE
FREIN DE STATIONNEMENT

(30) Priorität: 16.12.2016 EP 16204639
(43) Veröffentlichungstag der Anmeldung: 23.10.2019
(73) Patentinhaber: INVENTIO AG, 6052 Hergiswil (CH)
(72) Erfinder: HUSMANN, Josef, 6006 Luzern (CH)
(74) Vertreter: Inventio AG
(86) Internationale Anmeldenummer: PCT/EP2017/082655
(87) Internationale Veröffentlichungsnummer: WO 2018/109020

(56) Entgegenhaltungen:
- WO-A1-2014/154306
- WO-A1-2015/090726
- US-A- 1 670 779
- US-A- 2 326 046

## Beschreibung

Die Erfindung betrifft Bremsvorrichtungen, eine Aufzugsanlage mit einer Bremsvorrichtung und ein Verfahren zum Halten einer Aufzugskabine an einer Haltestelle.

Aus dem Stand der Technik ist eine Vielzahl von Bremsvorrichtungen an Aufzugsanlagen bekannt, die als Sicherheitsbremse dienen und die in einer Situation, in welcher keine äussere Kraft auf die Bremsbacken wirkt, zum Beispiel in einem unbestromten Fall, zu einer Bremswirkung führen. Diese Bremsvorrichtungen können als Keilfangbremsen, Exzenterbremsen oder auch als Zangenbremsen ausgeführt sein.

Zudem sind Bremsvorrichtungen in der Form von Dämfungsbremsen bekannt, die zum Dämpfen von Schwingungen der Aufzugskabine an einer Haltestelle dienen. Insbesondere wenn die Aufzugskabine be- oder entladen wird, kann es durch die Gewichtsverlagerung zu vertikalen Bewegungen der Kabine kommen. Diese können zwar mit Minimalfahrten ausgeglichen werden, wobei für den Fahrgast allerdings das Gefühl der Instabilität entstehen kann. Überdies bedingen die Minimalfahrten einen höheren Verschleiss und verursachen durch die Bewegung zwischen Kabine und Schachtöffnung ein gewisses Sicherheitsrisiko beziehungsweise entsprechende Überwachungsfunktionen.

Solche Bremsvorrichtungen können dementsprechend Vibrationen und vertikale Bewegungen verringern, während die Aufzugskabine an einer Haltestelle, insbesondere an einer Schachtöffnung auf einer Etage, positioniert ist.

Derartige Bremsvorrichtungen sind in der Regel nicht sicherheitsrelevant. Sie dienen vornehmlich dem Komfort während eines Kabinenhalts.

Diese Bremsvorrichtungen oder Dämfungsbremsen verfügen typischerweise über einen Mechanismus zum Betätigen und zum Lösen der Bremse. Die Bremsbacken müssen nicht unter einer Vorspannung stehen, da die Bremsvorrichtung nicht selbsttätig auslösen muss.

Um die Bremswirkung zu erzielen, kann die Bremsvorrichtung in eine Bremsposition gebracht werden, in welcher ein Reibschluss an einer Führungsschiene der Aufzugsanlage zu einem Festhalten führt. Vor der Weiterfahrt der Aufzugskabine wird durch einen entsprechenden Steuerbefehl an die Bremsvorrichtung der Reibschluss aufgehoben. Derartige Bremsvorrichtungen sind beispielsweise aus WO 2014/154306 oder WO 2015/090726 bekannt. Hierbei werden zwei jeweils zentral gelagerte Bremsarme von einem gemeinsamen linearen Antrieb bewegt. Beide Bremsarme sind endseitig jeweils mit einem Kniehebel verbunden, was eine gewisse Grösse des Bremsvorrichtungsaufbaus bedingt.

Aus der Veröffentlichung US2326046 ist eine Bremsanordnung gemäß dem Oberbegriff des Anspruchs 1 bekannt, wobei zwei Bremsschenkel mittels Druck- und Übertragungshebel über ein federbelastetes Gestänge, bei entsprechender Freigabe des Gestänges an eine Bremsschiene angepresst werden. Auch diese Bremseinrichtung benötigt viel Platz und ist aufwändig.

Es besteht die Aufgabe der Erfindung, die Nachteile des Bekannten zu vermeiden und eine Bremsvorrichtung, eine Aufzugsanlage mit einer Bremsvorrichtung und ein Verfahren zum Halten einer Aufzugskabine an einer Haltestelle bereitzustellen, die eine leichte Bedienung und eine kompakte Anordnung ermöglichen und welche bevorzugt als Parkbremse verwendet werden kann.

Die der Erfindung zugrundeliegende Aufgabe wird gelöst durch eine Bremsvorrichtung mit den Merkmalen der unabhängigen Patentansprüche. Die Bremsvorrichtung umfasst zwei Schenkel mit Bremsenden. Der erste Schenkel ist gelenkig mit einem ersten Anlenkpunkt mindestens eines Übertragungshebels verbunden. Der Übertragungshebel weist einen zweiten, in Längsrichtung vom ersten Anlenkpunkt beabstandeten Anlenkpunkt auf. Dieser zweite Anlenkpunkt ist gelenkig mit einem ersten Drehpunkt mindestens eines Druckhebels verbunden.

Der zweite Schenkel ist gelenkig mit einem zweiten Drehpunkt des Druckhebels verbunden. Ein dritter Drehpunkt des Druckhebels ist gelenkig mit einem Anlenkpunkt eines Betätigungselements, insbesondere einem Kurbelanlenkpunkt einer Kurbelstange verbunden, so dass durch eine Längsbewegung Betätigungselements beziehungsweise der Kurbelstange die Bremsvorrichtung von einer Bremsposition, in welcher die Bremsenden einen minimalen Abstand voneinander haben, in eine geöffnete Position, in welcher die Bremsenden einen maximalen Abstand voneinander haben, und umgekehrt bewegbar ist. Die Längsbewegung des Betätigungselements ist hierbei in einem Lösungsansatz durch einen ersten Endpunkt und einen zweiten Endpunkt vorbestimmt.

Eine Zugkraft im Betätigungselement beziehungsweise der Kurbelstange wird dabei in eine Druckkraft der Bremsenden umgesetzt. In einer beispielhaften Auslegung führt eine Zugkraft von 1kN zu einer Druckkraft von etwa 4.5kN. Diese Druckkraft ist notwendig für eine Aufzugskabine mit einer Nominallast von 1250kg mit zwei Bremsvorrichtungen, die zusammen 50% der Nominallast ausbalancieren, wenn ein Reibungskoeffizient von 0.4 zugrunde gelegt wird. Mit dieser Auslegung ist die Bremsvorrichtung in der Lage einen wesentlichen Teil einer Laständerung, welche bei einem Entladen und Beladen in der Haltestelle erfolgt, aufzunehmen, ohne dass eine Verschiebung der Aufzugskabine erfolgt. Die Bremsvorrichtung wirkt als Parkbremse.

Bevorzugt liegt eine ebene Hebelanordnung von Schenkeln, Übertragungshebel, Druckhebel und Kurbelstange vor, bei der alle Drehachsen der gelenkigen Verbindungen parallel angeordnet sind.

Die Schenkel, welche die Druckkraft auf eine Schiene übertragen können, sind durch den Übertragungshebel und den Druckhebel miteinander verbunden, deren Position den Abstand der Bremsenden voneinander bestimmt. Die Anordnung erfordert also keine jeweils gleichartigen Hebel für jeden Schenkel. Diese Asymmetrie erlaubt eine kompakte Anordnung der Bremsvorrichtung. Der Druckhebel kann so angeordnet sein, dass der dritte Drehpunkt nicht zwischen den Schenkeln liegt. Eine besonders kompakte Anordnung ergibt sich aber, wenn sich der dritte Drehpunkt zwischen den Schenkeln befindet.

Die Schenkel können in einem zentralen Drehpunkt gelagert sein. Dabei kann die Länge von dem Lagerpunkt zu dem Bremsende kleiner sein als die Länge zwischen Lagerpunkt und Anlenkpunkten, um hinsichtlich der Druckkraft eine optimale Hebelwirkung zu erzielen. Dies führt aber zu einem relativ aufwändigen Aufbau. Erfindungsgemäß ist daher der dem Bremsende gegenüberliegende Endbereich jedes Schenkels gelenkig mit einem Bremsvorrichtungsrahmen verbunden. Die Anlenkpunkte auf den Schenkeln liegen also zwischen den Bremsenden und der Verbindung zum Bremsvorrichtungsrahmen. Dies erlaubt einen kompakten Aufbau mit eher kurzen Schenkeln. Die Bremsvorrichtung kann daher mit wenig Material und somit geringem Gewicht ausgeführt werden. Die Bremsvorrichtung, die mit der Aufzugskabine mitbewegt werden muss, belastet daher nur in geringem Masse die Energiebilanz der Aufzugsanlage.

In einer vorteilhaften Ausführung der Bremsvorrichtung ist der Kurbelanlenkpunkt der Kurbelstange beziehungsweise der Anlenkpunkt des Betätigungselements zwischen den Schenkeln angeordnet. Bevorzugt ist ein Grossteil der Kurbelstange zwischen den Schenkeln angeordnet. Die Hin- und Her- Bewegung der Kurbelstange in Längsrichtung erfolgt im Wesentlichen entlang der Längsausrichtung der Bremsschenkel. Der Kurbelanlenkpunkt macht dabei eine Bewegung entlang einer Kurve, welche durch den Druckhebel vorgegeben wird.

Vorteilhafterweise sind die Drehpunkte des Druckhebels und die Anlenkpunkte des Übertragungshebels so angeordnet, dass in der Bremsposition der zweite Drehpunkt im Wesentlichen auf einer Verbindungslinie zwischen dem ersten und zweiten Anlenkpunkt des Übertragungshebels liegen und der Druckhebel in der geöffneten Position gegenüber der Bremsposition um 90° um den zweiten Drehpunkt gedreht ist. Damit ist die Kurbelstange in der Bremsposition im Wesentlichen kraftlos, da Druckhebel und Übertragungshebel im oder zumindest in der Nähe eines Totpunktes sind.

Der zweite Drehpunkt und der erste Anlenkpunkt und damit die Bremsenden der Bremsschenkel haben in der Bremsposition den minimal möglichen Abstand.

Der dritte Drehpunkt kann von der Kurbelstange um 90° um den zweiten Drehpunkt gedreht werden, wobei die Kurbelstange den maximal möglichen Weg zurücklegt.

In einer vorteilhaften Ausführung der Bremsvorrichtung sind die Anlenkpunkte an den Schenkeln, dem Übertragungshebel und an dem Druckhebel so angeordnet, dass die Bremsenden zwischen der Bremsposition und der geöffneten Position jeweils mindestens einen Weg von 7 mm zurücklegen.

In der geöffneten Position, die üblicherweise im Fahrbetreib eingenommen wird, haben die Bremsenden beziehungsweise an den Bremsenden angeordnete Bremsteile einen ausreichenden Abstand zu der Schiene, so dass die Bremsvorrichtung die Fahrt der Aufzugskabine nicht stört, auch wenn die Aufzugskabine während der Fahrt geringfügigen Schwankungen unterliegt.

An den Bremsenden können Bremsbeläge und/oder Bremsbelagträger angeordnet sein. Die Bremsbelagträger können federnd an den Bremsenden gelagert sind, insbesondere über vorgespannte Federelemente. Mit den Federelementen kann die Druckkraft, die auf die Schiene wirkt, eingestellt werden, da ein Zustellweg der Bremsenden durch eine Geometrie der beteiligten Hebel, Schenkel und der zugehörenden Verbindungspunkte gegeben ist, kann durch eine Wahl der Federelemente die schlussendliche Druckkraft eingestellt werden. Die Federelemente können schwenkbar um eine vertikale Achse gelagert sein, um eine eventuelle nicht exakte Positionierung der Bremsvorrichtung gegenüber der Schiene auszugleichen.

Bei den Federelementen kann es sich um elastische Körper handeln, zum Beispiel einen PU Block, ähnlich wie sie bei Stanzen eingesetzt werden, und die eine grosse Anzahl von Einsatzoperationen, im Besonderen bei schnellen Lastwechseln, ermöglichen.

Die Bremsvorrichtung kann, insbesondere auf Bremsbelagträgern angebrachte, Bremsbeläge aufweisen.

Für die Bremsbeläge wird bevorzugt ein weiches Material verwendet, das eine hohe Reibung erzeugt, auch wenn sich Öl auf der Schiene befinden sollte. Dafür kommen zum Beispiel Kunststoff oder Kautschuk basierte Materialien in Frage oder es können Materialien mit aufgerauter oder strukturierter Bremsfläche verwendet werden.

In einer vorzugsweisen Ausführung der Bremsvorrichtung weist die Bremsvorrichtung zwei parallel zueinander angeordnete Übertragungshebel und zwei parallel zueinander angeordnete Druckhebeln auf, wovon jeweils ein Übertragungshebel und ein Druckhebel auf jeweils einer Seite der Schenkel und der Kurbelstange vorgesehen sind.

Die parallele Ausführung erhöht die Stabilität, vermindert eine Torsion der Bremsvorrichtung, insbesondere wenn eine horizontale Kraft auf die Bremsvorrichtung wirkt, und sorgt somit für eine gleichmässige Kraftbeaufschlagung durch die beiden Bremsenden.

Die Kurbelstange kann von einem Aktuator bewegt werden, beispielsweise von einem Linearmotor. Eine Ausführungsform, die nicht Teil der Erfindung darstellt, betrifft eine Bremsvorrichtung für eine Aufzugsanlage zum Erzeugen eines Reibschlusses an einer Schiene der Aufzugsanlage, insbesondere eine Bremsvorrichtung wie oben beschrieben, mit mindestens einem Schenkel mit Bremsende und einem Betätigungselement, wobei durch eine Längsbewegung des Betätigungselements die Bremsvorrichtung von einer Bremsposition, in welcher das Bremsende einen minimalen Abstand von der Schiene hat, in eine geöffnete Position, in welcher das Bremsende einen maximalen Abstand von der Schiene hat, und umgekehrt bewegbar ist. Die Längsbewegung des Betätigungselements ist hierbei durch einen ersten und einen zweiten Endpunkt vorbestimmt. In einer vorzugsweisen Ausführung erfolgt dies dadurch, dass ein Endbereich des Betätigungselements gelenkig mit einer Kurbel verbunden ist, die um 180° zwischen zwei Totpunkten drehbar ist. Ist die Kurbel in dem einen Totpunkt, so hat das Betätigungselement eine Lage, in welcher sich die Bremsvorrichtung in der Bremsposition befindet. Ist die Kurbel in dem anderen Totpunkt, so hat das Betätigungselement eine Lage, in welcher sich die Bremsvorrichtung in der geöffneten Position befindet. Die beiden Totpunkte, bestimmen die beiden Endpunkte, die die Längsbewegung des Betätigungselements bestimmen. Die Bremse wird also stets aktiv betätigt und auch wiederum aktiv gelöst. Sie funktioniert sinngemäss wie eine Parkbremse eines Autos, welche ebenfalls beim Halten aktiv betätigt und vor einem Wegfahren aus einem Halt wieder aktiv gelöst wird.

Die Kurbel ist insbesondere durch einen Motor antreibbar.

Die Kurbel definiert durch ihre Totpunkte zwei charakteristische Punkte der Bremsvorrichtung, zwischen denen die Bremsvorrichtung über die Kurbel hin und her schaltbar ist. Die Bremsvorrichtung hat damit definierte Endzustände und es besteht nicht Gefahr, dass die Bremsvorrichtung in einem Zwischenzustand, der weder der Bremsposition noch der geöffneten Position entspricht, verbleibt.

Die Bremsvorrichtung kann über einen beweglichen Schenkel verfügen, bevorzugt hat die Bremsvorrichtung zwei Schenkel.

Bei dem Betätigungselement handelt es sich insbesondere um eine Kurbelstange. Diese kann gelenkig mit einem Druckhebel verbunden sein, welche einerseits direkt an einen Schenkel mit einem Bremsende angelenkt ist, andererseits indirekt über einen Übertragungshebel mit einem zweiten Schenkel mit einem Bremsende verbunden sein.

Der Übergang der Kurbel von einem Totpunkt in den anderen Totpunkt kann zu einer Drehung des Druckhebels um 90° führen, und damit zu einem Übergang zwischen Bremsposition und geöffneter Position wie oben beschrieben.

Bevorzugt umfasst die Bremsvorrichtung einen Motor, insbesondere einen Getriebemotor. Der Motor kann, ähnlich wie bei einem Autoscheibenwischer, die Kurbel zwischen den Totpunkten hin und her bewegen.

Der Motor kann durch mindestens einen Endschalter gesteuert sein, insbesondere eine Mikroprozessorsteuerung und/oder einen Elektroschalter. Vorzugsweise sind zwei Endschalter verwendet, die an den beidseitigen Endpositionen der Kurbel oder an den beiden Endpunkten, die die Längsbewegung des Betätigungselements bestimmen oder den beidseitigen Totpunktlagen der Kurbel angeordnet sind. Die Steuerung kann dadurch einfach ausgeführt werden, da der Motor einfach zwischen den beiden vorgegebenen Endpositionen verfahren werden kann.

In einer vorteilhaften Ausführung der Bremsvorrichtung umfasst der Rahmen eine Haltevorrichtung, mit welcher die Bremsvorrichtung an einer Aufzugskabine fixierbar ist. Der Rahmen kann als Gehäuse ausgebildet sein.

Die Aufgabe wird ausserdem gelöst durch eine Aufzugskabine mit mindestens einer erfindungsgemäßen Bremsvorrichtung.

Die Aufgabe wird ausserdem gelöst durch eine Aufzugsanlage mit mindestens einer erfindungsgemäßen Bremsvorrichtung.

Bevorzugt umfasst die Aufzugsanlage mindestens eine Aufzugskabine mit mindestens einer erfindungsgemäßen Bremsvorrichtung und mindestens eine Führungsschiene.

Die Aufgabe wird ausserdem gelöst durch ein Verfahren zum Halten einer Aufzugskabine an einer Haltestelle nach Anspruch 13.

Bevorzugte Ausführungsbeispiele der Erfindung sind in der nachfolgenden Beschreibung anhand der beigefügten Zeichnungen näher erläutert. Dabei sind entsprechende Elemente mit übereinstimmenden Bezugszeichen versehen.

Es zeigen:
- Figur 1: eine schematische Darstellung eines ersten Beispiels einer Bremsvorrichtung in geöffneter Position in Draufsicht;
- Figur 2: eine schematische Darstellung des ersten Beispiels einer Bremsvorrichtung in einer Zwischenposition in Draufsicht;
- Figur 3: eine schematische Darstellung des ersten Beispiels einer Bremsvorrichtung in Bremsposition in Draufsicht;
- Figur 4: eine schematische Darstellung des ersten Beispiels einer Bremsvorrichtung in Bremsposition in perspektivischer Ansicht;
- Figur 5: eine schematische Darstellung eines zweiten Beispiels einer Bremsvorrichtung in Bremsposition in Draufsicht;
- Figur 6a: eine schematische Darstellung eines Beispiels einer Aufzugsanlage in Draufsicht;
- Figur 6b: eine schematische Darstellung der Aufzugsanlage von Fig. 6a in seitlicher Ansicht.

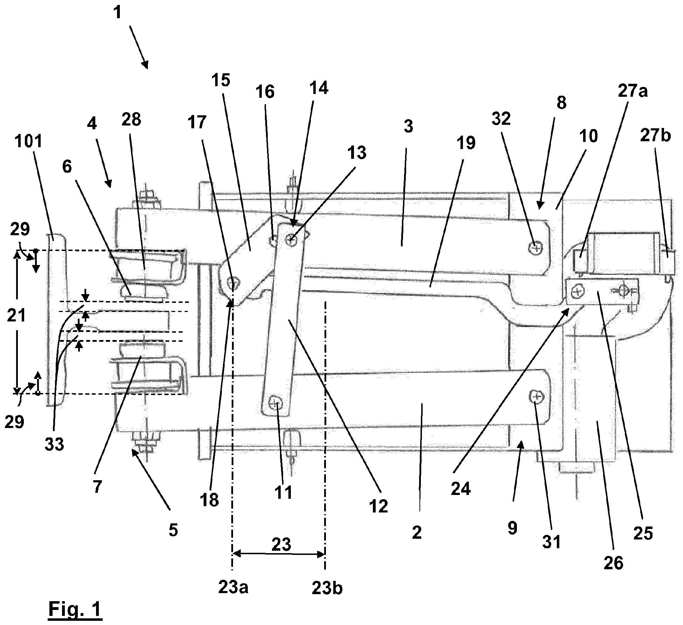

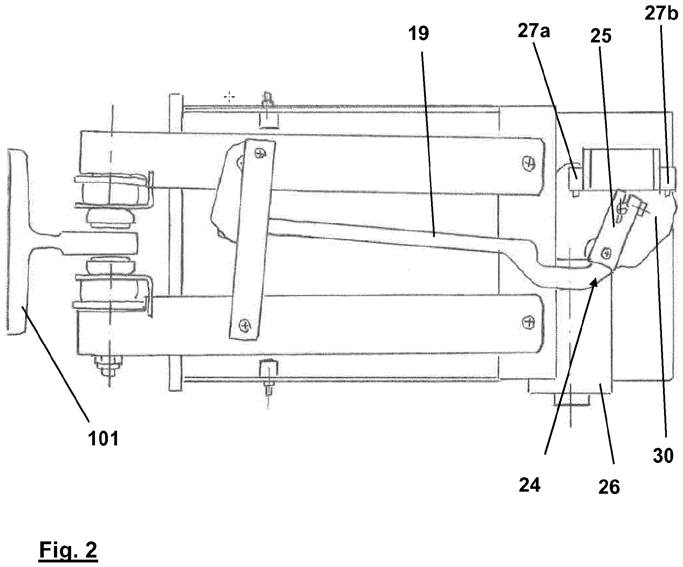

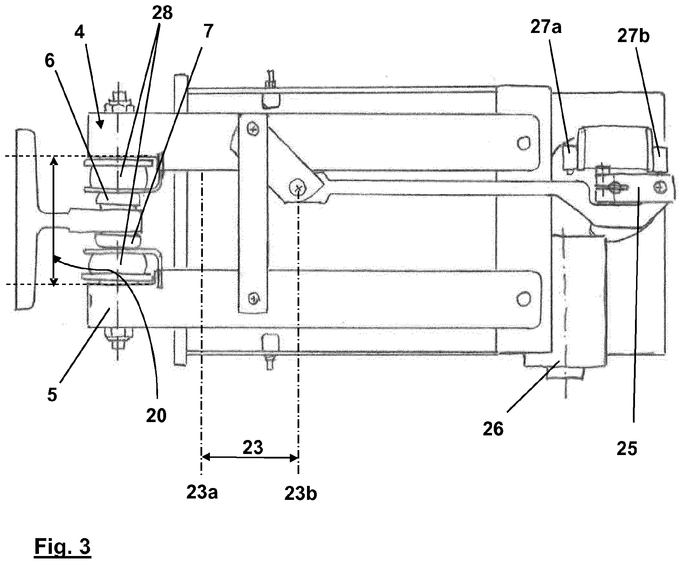

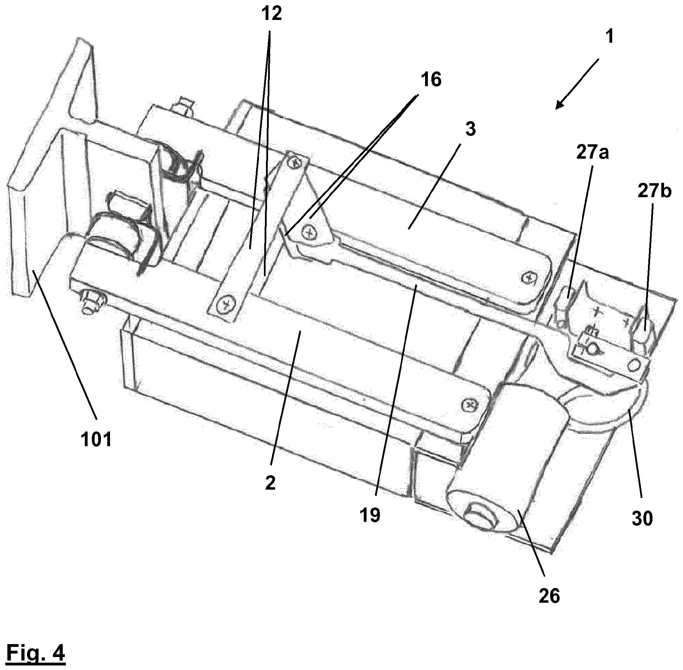

Figur 1 zeigt eine schematische Darstellung eines ersten Beispiels einer Bremsvorrichtung 1 in geöffneter Position in Draufsicht. Figur 2 zeigt dasselbe Beispiel in einer Zwischenposition und Figur 3 zeigt dasselbe Beispiel in einer Bremsposition. Die Bremsposition ist in Figur 4 nochmals in perspektivischer Ansicht dargestellt.

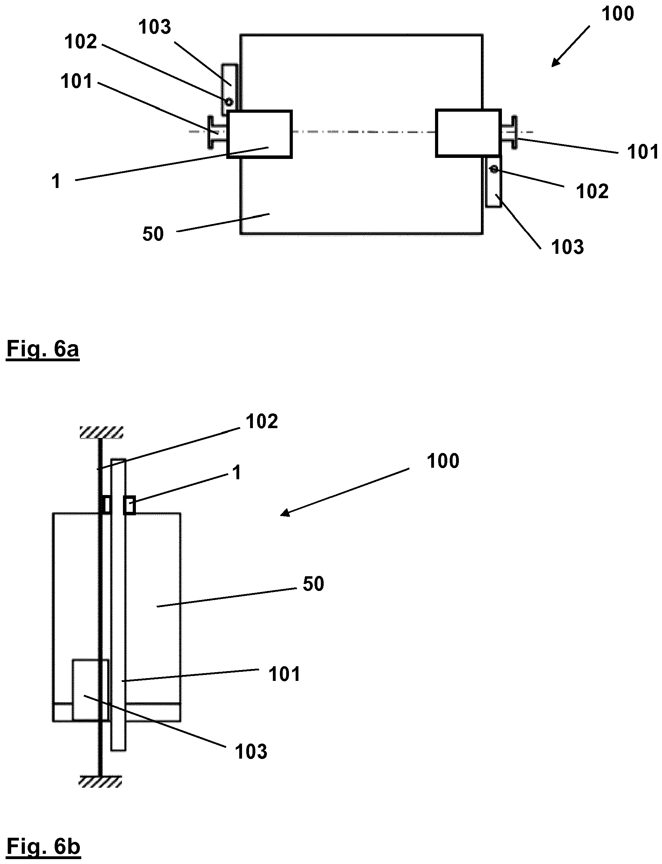

Die Bremsvorrichtung 1 dient in einer hier nicht explizit dargestellten Aufzugsanlage 100 (siehe Figuren 6a, 6b) zum Erzeugen eines Reibschlusses an einer Schiene 101 der Aufzugsanlage.

Die Bremsvorrichtung umfasst zwei Schenkel 2, 3, die jeweils ein Bremsende 4, 5 aufweisen.

Der erste Schenkel 2 ist gelenkig mit einem ersten Anlenkpunkt 11 eines Übertragungshebels 12 verbunden. Der Übertragungshebel 12 weist einen zweiten, in Längsrichtung vom ersten Anlenkpunkt 11 beabstandeten Anlenkpunkt 13 auf, welcher gelenkig mit einem ersten Drehpunkt 14 eines Druckhebels 15 verbunden ist.

Der zweite Schenkel 3 ist gelenkig mit einem zweiten Drehpunkt 16 des Druckhebels 15 verbunden.

Ein dritter Drehpunkt 17 des Druckhebels 15 ist gelenkig mit einem Anlenkpunkt 18 eines Betätigungselements 19 verbunden. Im Folgenden ist das Betätigungselement 19 als Kurbelstange 19 ausgeführt und dementsprechend ist der Anlenkpunkt 18 des Betätigungselements als Kurbelanlenkpunkt 18 ausgeführt. Diese Teile sind gleichwirkend und entsprechend mit dem gleichen Bezugszeichen bezeichnet.

Durch eine Längsbewegung 23 der Kurbelstange 19 ist die Bremsvorrichtung 1 von einer geöffneten Position, in welcher die Bremsenden 4, 5 einen maximalen Abstand 21 voneinander haben in eine Bremsposition, in welcher die Bremsenden 4, 5 einen minimalen Abstand 20 voneinander haben (siehe Figur 3), bewegbar. Die Längsbewegung ist hierbei durch einen ersten Endpunkt 23a (siehe Figur 1) und einen zweiten Endpunkt 23b (siehe Figur 3) bestimmt.

Die den Bremsenden 4, 5 gegenüberliegenden Endbereiche 8, 9 jedes Schenkels 2, 3 sind jeweils verschwenkbar mittels Lagerstellen 31, 32 mit einem Bremsvorrichtungsrahmen 10 verbunden. Der Rahmen 10 kann an einer nicht dargestellten Aufzugskabine befestigt werden.

Der Kurbelanlenkpunkt 18 der Kurbelstange 19 ist zwischen den Schenkeln 2, 3 angeordnet, so dass die Kurbelstange 19 im Wesentlichen zwischen den Schenkeln 2, 3 hin und her bewegbar ist.

Die Anlenkpunkte an den Schenkeln 2, 3, dem Übertragungshebel 12 und die Drehpunkte 14, 16, 17 des Druckhebels 16 sind so angeordnet, dass die Bremsenden 4, 5 zwischen der Bremsposition und der geöffneten Position jeweils eine Weglänge 29 von total mindestens 7 mm zurücklegen. Die Weglänge 29 ist grösser als die Summe eines beidseitigen Luftspaltes 33. Der Luftspalt 33 entspricht dem freien Durchfahrtsspiel zwischen Bremsoberflächen und Führungsschiene bei geöffneter Bremsvorrichtung 1.

Die Bremsvorrichtung 1 umfasst Bremsbelagträger 6, 7, die über Federelemente 28 federnd an den Bremsenden 4, 5 gelagert sind. Beim Schliessen der Bremsvorrichtung werden die Federelemente 28 gespannt, so dass sich eine entsprechende Druckkraft aufbaut, welche eine entsprechende Halte- oder Bremskraft der Bremsvorrichtung bewirkt.

Ein dem Kurbelanlenkpunkt 18 gegenüberliegender Endbereich 24 der Kurbelstange 19 ist gelenkig mit einer Kurbel 25 verbunden, die um 180° zwischen zwei Totpunkten drehbar ist. In den Totpunkten ist die Kurbel 25 jeweils zumindest annähernd in Längsrichtung der Kurbelstange 19 ausgerichtet, sodass die Bremsvorrichtung 1 sich in der geöffneten Position befindet, wenn sich die Kurbel 25 in dem einen Totpunkt befindet (siehe Figur 1), und die Bremsvorrichtung 1 sich in der Bremsposition befindet, wenn sich die Kurbel 25 in dem anderen Totpunkt befindet (siehe Figur 3).

Figur 2 zeigt die Bremsvorrichtung 1 in einer Zwischenposition, in welcher die Kurbel 25 sich in keinem der Totpunkte befindet.

Die Kurbel 25 ist durch einen Motor 26 antreibbar.

Der Motor 26 ist mit einem Getriebe 30 ausgestattet und wird durch zwei Endschalter 27a, 27b gesteuert, die die beidseitigen Endlagen der Kurbel 25 und damit die beiden Endpunkte 23a, 23b definieren.

In Figur 4 ist ersichtlich, dass die Bremsvorrichtung 1 zwei parallel zueinander angeordnete Übertragungshebel 12 und zwei parallel zueinander angeordnete Druckhebel 16 aufweist, wovon jeweils ein Übertragungshebel 12 und ein Druckhebel 16 auf jeweils einer Seite der Schenkel 2, 3 und der Kurbelstange 19 vorgesehen sind.

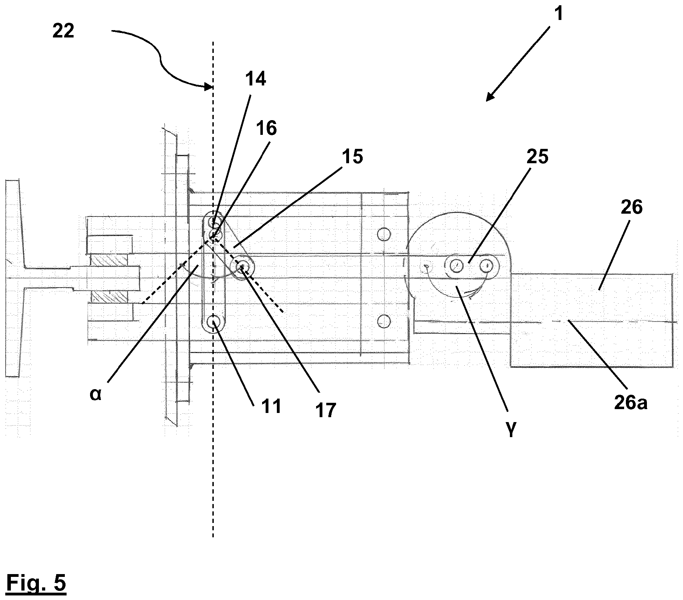

Figur 5 zeigt eine schematische Darstellung für ein zweites Beispiel einer Bremsvorrichtung 1 in Bremsposition in Draufsicht.

Die Drehpunkte 14, 16, 17 des Druckhebels 15 sind so angeordnet, dass in der Bremsposition der zweite Drehpunkt 16 auf einer Verbindungslinie 22 zwischen dem ersten und zweiten Anlenkpunkt 11, 13 des Übertragungshebels 12 liegen und der Druckhebel 15 in der geöffneten Position gegenüber der Bremsposition um einen Winkel α von 90° um den zweiten Drehpunkt 16 gedreht ist. Der Winkel α von 90° ist variierbar. Er wird vom Fachmann im Zusammenspiel der Hebelverhältnisse festgelegt.

Für die Drehung des Druckhebels 15 vollführt die Kurbel 25 eine Drehung um einen Winkel γ von 180° von einem Totpunkt in den anderen.

Weiter ist in der Ausführung gemäss Fig. 5 eine Motorachse 26a des Motors 26 in einer Verlängerungsrichtung der Bremsvorrichtung 1 angeordnet. Im Vergleich zur Ausführung gemäss den Figuren 1 bis 4 ergibt sich eine schlankere Bremse, die in Seitenrichtung weniger Platz beansprucht.

Figur 6a zeigt eine schematische Darstellung eines Beispiels einer Aufzugsanlage 100 in Draufsicht, Figur 6b dasselbe Beispiel in seitlicher Ansicht. Die Aufzugsanlage 100 umfasst eine Aufzugskabine 50. An dieser sind zwei Sicherheitsbremsen 103 angebracht, die in diesem Beispiel mit jeweils einem Seil 102 zusammenwirken können. Diese Ausführung ist beispielhaft. Selbstverständlich können die Sicherheitsbremsen 103 als übliche bekannte Fangvorrichtungen ausgelegt sein, die mit T-förmigen Führungsschienen zusammenwirken, wie sie in den Figuren 1 bis 5 dargestellt sind.

Zusätzlich sind an der Aufzugskabine 50 zwei Bremsvorrichtungen 1 angebracht, die einen Reibschluss mit einer Führungsschiene 101 bewirken können. Die Bremsvorrichtungen 1 sind nicht automatisch schliessend, wenn beispielsweise eine bestimmte Geschwindigkeit überschritten wird. Sie dienen dem Komfort an einer Haltestelle.

## Patentansprüche

1. Bremsvorrichtung (1) für eine Aufzugsanlage (100) zum Erzeugen eines Reibschlusses an einer Schiene (101) der Aufzugsanlage (100) und zum Halten einer Aufzugskabine (50) in einer Parkposition, wobei die Bremsvorrichtung zwei Schenkel (2, 3) mit Bremsenden (4, 5) umfasst, wobei
der erste Schenkel (2) gelenkig mit einem ersten Anlenkpunkt (11) mindestens eines Übertragungshebels (12) verbunden ist, der einen zweiten in Längsrichtung vom ersten Anlenkpunkt (11) beabstandeten Anlenkpunkt (13) aufweist, welcher gelenkig mit einem ersten Drehpunkt (14) mindestens eines Druckhebels (15) verbunden ist,
der zweite Schenkel (3) gelenkig mit einem zweiten Drehpunkt (16) des Druckhebels (15) verbunden ist,
und ein dritter Drehpunkt (17) des Druckhebels (15) gelenkig mit einem Anlenkpunkt (18) eines Betätigungselements (19) verbunden ist, so dass durch eine Längsbewegung (23) des Betätigungselements (19) die Bremsvorrichtung (1) von einer Bremsposition, in welcher die Bremsenden (4, 5) einen minimalen Abstand (20) voneinander haben, in eine geöffnete Position, in welcher die Bremsenden (4, 5) einen maximalen Abstand (21) voneinander haben, und umgekehrt bewegbar ist, wobei
die Längsbewegung (23) des Betätigungselements (19) durch einen ersten Endpunkt (23a) und einen zweiten Endpunkt (23b) vorbestimmt ist, **dadurch gekennzeichnet,**
**dass** der dem Bremsende (4, 5) gegenüberliegende Endbereich (8, 9) jedes Schenkels (2, 3) gelenkig mit einem Bremsvorrichtungsrahmen (10) verbunden ist.

2. Bremsvorrichtung (1) gemäss Anspruch 1, **dadurch gekennzeichnet, dass** die Drehpunkte (14, 16, 17) des Druckhebels (15) so angeordnet sind, dass in der Bremsposition der zweite Drehpunkt (16) auf einer Verbindungslinie (22) zwischen dem ersten Anlenkpunkt (11) und dem zweiten Anlenkpunkt (13) des Übertragungshebels (12) liegen.

3. Bremsvorrichtung (1) gemäss einem der vorhergehenden Ansprüche, **dadurch gekennzeichnet, dass** die Bremsvorrichtung (1) Bremsbelagträger (6, 7) umfasst, die federnd an den Bremsenden (4, 5) gelagert sind, insbesondere über vorgespannte Federelemente (28).

4. Bremsvorrichtung (1) gemäss einem der vorhergehenden Ansprüche, **dadurch gekennzeichnet, dass** die Bremsvorrichtung (1) zwei parallel zueinander angeordnete Übertragungshebel (12) und zwei parallel zueinander angeordnete Druckhebel (15) aufweist, wovon jeweils ein Übertragungshebel (12) und ein Druckhebel (15) auf jeweils einer Seite der Schenkel (2, 3) und des Betätigungselements (19) vorgesehen sind.

5. Bremsvorrichtung (1) gemäss einem der vorhergehenden Ansprüche, **dadurch gekennzeichnet, dass** das Betätigungselement (19) zwischen den Schenkeln (2, 3) angeordnet ist.

6. Bremsvorrichtung (1) gemäss einem der vorhergehenden Ansprüche, **dadurch gekennzeichnet, dass** ein Endbereich (24) des Betätigungselements (19) gelenkig mit einer Kurbel (25) verbunden ist, die im Wesentlichen um 180° zwischen zwei Totpunkten drehbar ist, und die Kurbel (25) antreibbar ist, wobei die zwei Totpunkte den ersten Endpunkt (23a) und den zweiten Endpunkt (23b) des Betätigungselements bestimmen, wodurch die Längsbewegung (23) des Betätigungselements bestimmt ist.

7. Bremsvorrichtung (1) gemäss einem der vorhergehenden Ansprüche, **dadurch gekennzeichnet, dass** die Bremsvorrichtung einen Motor (26), insbesondere einen Getriebemotor umfasst und der Motor (26) das Betätigungselement (19), insbesondere die Kurbel (25) antreibt.

8. Bremsvorrichtung (1) gemäss Anspruch 7, **dadurch gekennzeichnet, dass** der Motor (26) durch mindestens einen Endschalter (27a, 27b) gesteuert ist, welcher Endschalter (27a, 27b) zumindest einen des ersten oder zweiten Endpunkts (23a, 23b) bestimmt.

9. Bremsvorrichtung (1) gemäss Anspruch 7, **dadurch gekennzeichnet, dass** der Motor (26) durch einen ersten Endschalter (27a) und einen zweiten Endschalter (27b) gesteuert ist, welche Endschalter (27a, 27b) den ersten Endpunkt (23a) und den zweiten Endpunkt (23b) bestimmen.

10. Bremsvorrichtung (1) gemäss einem der vorhergehenden Ansprüche, **dadurch gekennzeichnet, dass** der Rahmen (10) eine Haltevorrichtung umfasst, mit welcher die Bremsvorrichtung (1) an der Aufzugskabine (50) fixierbar ist.

11. Aufzugskabine (50) mit mindestens einer Bremsvorrichtung (1) gemäss einem der Ansprüche 1-10.

12. Aufzugsanlage mit mindestens einer Bremsvorrichtung (1) gemäss einem der Ansprüche 1-10.

13. Verfahren zum Halten einer Aufzugskabine (50) an einer Haltestelle umfassend die folgenden Schritte:
Bewegen einer Bremsvorrichtung (1) gemäss einem der Ansprüche 1-10 von einer geöffneten Position in eine Bremsposition durch eine Längsbewegung (23) eines Betätigungselements (19), insbesondere einer Kurbelstange.

14. Verfahren zum Halten einer Aufzugskabine (50) an einer Haltestelle gemäss Anspruch 13, wobei ein Motor eine mit dem Betätigungselement (19), insbesondere der Kurbelstange verbundene Kurbel (25) von einem zweiten Totpunkt in einen ersten Totpunkt überführt, sodass die Bremsvorrichtung (1) von einer Bremsposition, in welcher sich die Kurbel (25) in einem zweiten Totpunkt befindet und das Bremsende (4, 5) mindestens eines Bremsschenkels (2, 3) einen minimalen Abstand (20) zu einer Schiene (101) im Aufzugsschacht hat, in eine geöffnete Position, in welcher sich die Kurbel (25) in einem ersten Totpunkt befindet und in welcher das Bremsende (4, 5) mindestens eines Bremsschenkels (2, 3) einen maximalen Abstand (21) zu einer Schiene (101) im Aufzugsschacht hat, und umgekehrt bewegbar ist.

## Claims

1. Braking device (1) for an elevator installation (100) for generating a frictional connection on a rail (101) of the elevator installation (100) and for stopping an elevator car (50) in a parking position, the braking device comprising two legs (2, 3) having brake ends (4, 5), the first leg (2) being articulated to a first articulation point (11) of at least one transmission lever (12) having a second articulation point (13) which is spaced apart from the first articulation point (11) in the longitudinal direction and is articulated to a first pivot point (14) of at least one pressure lever (15),
the second leg (3) being articulated to a second pivot point (16) of the pressure lever (15), and a third pivot point (17) of the pressure lever (15) being articulated to an articulation point (18) of an actuating element (19) such that, by means of a longitudinal movement (23) of the actuating element (19), the braking device (1) can be moved from a braking position, in which the brake ends (4, 5) have a minimum distance (20) from one another, into an open position, in which the brake ends (4, 5) have a maximum distance (21) from one another, and vice versa, the longitudinal movement (23) of the actuating element (19) being predetermined by a first end point (23a) and a second end point (23b),
**characterized in that** the end region (8, 9) of each leg (2, 3) opposite the brake end (4, 5) is articulated to a braking device frame (10).

2. Braking device (1) according to either claim 1, **characterized in that** the pivot points (14, 16, 17) of the pressure lever (15) are arranged such that, in the braking position, the second pivot point (16) is on a connecting line (22) between the first articulation point (11) and the second articulation point (13) of the transmission lever (12).

3. Braking device (1) according to either of the preceding claims, **characterized in that** the braking device (1) comprises brake pad carriers (6, 7) which are resiliently mounted on the brake ends (4, 5), in particular by means of preloaded spring elements (28).

4. Braking device (1) according to any of the preceding claims, **characterized in that** the braking device (1) has two transmission levers (12) arranged in parallel with one another and two pressure levers (15) arranged in parallel with one another, one transmission lever (12) and one pressure lever (15) of which are each provided on one side of the leg (2, 3) and of the actuating element (19), respectively.

5. Braking device (1) according to any of the preceding claims, **characterized in that** the actuating element (19) is arranged between the legs (2, 3).

6. Braking device (1) according to any of the preceding claims, **characterized in that** an end region (24) of the actuating element (19) is articulated to a crank (25) which can be rotated substantially by 180° between two dead centers, and the crank (25) can be driven, the two dead centers determining the first end point (23a) and the second end point (23b) of the actuating element, as a result of which the longitudinal movement (23) of the actuating element is determined.

7. Braking device (1) according to any of the preceding claims, **characterized in that** the braking device comprises a motor (26), in particular a geared motor, and the motor (26) drives the actuating element (19), in particular the crank (25).

8. Braking device (1) according to claim 7, **characterized in that** the motor (26) is controlled by at least one limit switch (27a, 27b), which limit switch (27a, 27b) determines at least one of the first or second end points (23a, 23b).

9. Braking device (1) according to claim 7, **characterized in that** the motor (26) is controlled by a first limit switch (27a) and a second limit switch (27b), which limit switches (27a, 27b) determine the first end point (23a) and the second end point (23b).

10. Braking device (1) according to any of the preceding claims, **characterized in that** the frame (10) comprises a stopping device by means of which the braking device (1) can be fixed to the elevator car (50).

11. Elevator car (50) having at least one braking device (1) according to any of claims 1 to 10.

12. Elevator installation comprising at least one braking device (1) according to any of claims 1 to 10.

13. Method for stopping an elevator car (50) at a stopping place, the method comprising the following steps:
moving a braking device (1) according to any of claims 1 to 10 from an opened position into a braking position by means of a longitudinal movement (23) of an actuating element (19), in particular a crank rod.

14. Method for stopping an elevator car (50) at a stopping place according to claim 13, wherein a motor transfers a crank (25) which is connected to the actuating element (19), in particular the crank rod, from a second dead center into a first dead center such that the braking device (1) can be moved from a braking position, in which the crank (25) is in a second dead center and the brake end (4, 5) of at least one brake leg (2, 3) is at a minimum distance (20) from a rail (101) in the elevator shaft, into an open position, in which the crank (25) is in a first dead center and in which the brake end (4, 5) of at least one brake leg (2, 3) is at a maximum distance (21) from a rail (101) in the elevator shaft, and vice versa.

## Revendications

1. Dispositif de freinage (1) pour une installation d'ascenseur (100) destiné à produire une adhérence par friction sur un rail (101) de l'installation d'ascenseur (100) et à maintenir une cabine d'ascenseur (50) dans une position de stationnement, le dispositif de freinage comprenant deux branches (2, 3) comportant des extrémités de frein (4, 5), la première branche (2) étant reliée de manière articulée à un premier point d'articulation (11) d'au moins un levier de transmission (12) qui présente un second point d'articulation (13) espacé du premier point d'articulation (11) dans la direction longitudinale, lequel second point d'articulation est relié de manière articulée à un premier point de pivotement (14) d'au moins un levier de pression (15),
la seconde branche (3) étant reliée de manière articulée à un deuxième point de pivotement (16) du levier de pression (15),
et un troisième point de pivotement (17) du levier de pression (15) étant relié de manière articulée à un point d'articulation (18) d'un élément d'actionnement (19), de sorte que, au moyen d'un mouvement longitudinal (23) de l'élément d'actionnement (19), le dispositif de freinage (1) peut être déplacé d'une position de freinage, dans laquelle les extrémités de frein (4, 5) sont à une distance minimale (20) l'une de l'autre, vers une position ouverte, dans laquelle les extrémités de frein (4, 5) sont à une distance maximale (21) l'une de l'autre, et inversement, le mouvement longitudinal (23) de l'élément d'actionnement (19) étant prédéfini par un premier point d'extrémité (23a) et un second point d'extrémité (23b), **caractérisé en ce que** la zone d'extrémité (8, 9), opposée à l'extrémité de frein (4, 5), de chaque branche (2, 3) est reliée de manière articulée à un cadre de dispositif de freinage (10).

2. Dispositif de freinage (1) selon la revendication 1, **caractérisé en ce que** les points de pivotement (14, 16, 17) du levier de pression (15) sont disposés de telle sorte que, dans la position de freinage, le deuxième point de pivotement (16) se trouve sur une ligne de liaison (22) entre le premier point d'articulation (11) et le second point d'articulation (13) du levier de transmission (12).

3. Dispositif de freinage (1) selon l'une des revendications précédentes,
**caractérisé en ce que** le dispositif de freinage (1) comprend des supports de garniture de frein (6, 7) montés de manière élastique au niveau des extrémités de frein (4, 5), en particulier par l'intermédiaire d'éléments élastiques précontraints (28).

4. Dispositif de freinage (1) selon l'une des revendications précédentes,
**caractérisé en ce que** le dispositif de freinage (1) présente deux leviers de transmission (12) disposés parallèlement l'un par rapport à l'autre et deux leviers de pression (15) disposés parallèlement l'un par rapport à l'autre, dont respectivement un levier de transmission (12) et un levier de pression (15) sont prévus sur respectivement un côté des branches (2, 3) et de l'élément d'actionnement (19).

5. Dispositif de freinage (1) selon l'une des revendications précédentes,
**caractérisé en ce que** l'élément d'actionnement (19) est disposé entre les branches (2, 3).

6. Dispositif de freinage (1) selon l'une des revendications précédentes,
**caractérisé en ce qu'**une zone d'extrémité (24) de l'élément d'actionnement (19) est reliée de manière articulée à une manivelle (25) qui peut tourner sensiblement de 180° entre deux points morts, et la manivelle (25) peut être entraînée, les deux points morts déterminant le premier point d'extrémité (23a) et le second point d'extrémité (23b) de l'élément d'actionnement, moyennant quoi le mouvement longitudinal (23) de l'élément d'actionnement est déterminé.

7. Dispositif de freinage (1) selon l'une des revendications précédentes,
**caractérisé en ce que** le dispositif de freinage comprend un moteur (26), en particulier un motoréducteur, et le moteur (26) entraîne l'élément d'actionnement (19), en particulier la manivelle (25).

8. Dispositif de freinage (1) selon la revendication 7, **caractérisé en ce que** le moteur (26) est commandé par au moins un interrupteur de fin de course (27a, 27b), lequel interrupteur de fin de course (27a, 27b) détermine au moins l'un parmi le premier ou le second point d'extrémité (23a, 23b).

9. Dispositif de freinage (1) selon la revendication 7, **caractérisé en ce que** le moteur (26) est commandé par un premier interrupteur de fin de course (27a) et un second interrupteur de fin de course (27b), lesquels interrupteurs de fin de course (27a, 27b) déterminent le premier point d'extrémité (23a) et le second point d'extrémité (23b).

10. Dispositif de freinage (1) selon l'une des revendications précédentes,
**caractérisé en ce que** le cadre (10) comprend un dispositif de maintien avec lequel le dispositif de freinage (1) peut être fixé à la cabine d'ascenseur (50).

11. Cabine d'ascenseur (50) comportant au moins un dispositif de freinage (1) selon l'une des revendications 1 à 10.

12. Installation d'ascenseur comportant au moins un dispositif de freinage (1) selon l'une des revendications 1 à 10.

13. Procédé permettant de maintenir une cabine d'ascenseur (50) au niveau d'un point de maintien, comprenant les étapes suivantes :
déplacement d'un dispositif de freinage (1) selon l'une des revendications 1 à 10 d'une position ouverte vers une position de freinage par un mouvement longitudinal (23) d'un élément d'actionnement (19), en particulier d'une bielle de manivelle.

14. Procédé permettant de maintenir une cabine d'ascenseur (50) au niveau d'un point de maintien selon la revendication 13, un moteur faisant passer une manivelle (25) reliée à l'élément d'actionnement (19), en particulier à la bielle de manivelle, d'un second point mort à un premier point mort, de sorte que le dispositif de freinage (1) peut être déplacé d'une position de freinage, dans laquelle la manivelle (25) se trouve dans un second point mort et l'extrémité de frein (4, 5) d'au moins une branche de frein (2, 3) est à une distance minimale (20) d'un rail (101) dans la cage d'ascenseur, vers une position ouverte, dans laquelle la manivelle (25) se trouve dans un premier point mort et dans laquelle l'extrémité de frein (4, 5) d'au moins une branche de frein (2, 3) est à une distance maximale (21) d'un rail (101) dans la cage d'ascenseur, et inversement.
